Europäisches Patentamt

European Patent Office

Office européen des brevets

(19)

(11) Publication number: **0 142 771**
**A2**

(12) # EUROPEAN PATENT APPLICATION

(21) Application number: **84113366.3**

(22) Date of filing: **06.11.84**

(51) Int. Cl.⁴: **C 04 B 35/10**

(30) Priority: **09.11.83 US 550869**

(43) Date of publication of application:
**29.05.85 Bulletin 85/22**

(84) Designated Contracting States:
**AT BE CH DE FR GB IT LI LU NL SE**

(71) Applicant: **LANDALLOY, INC.**
**2070 Research Drive**
**Livermore, Cal. 94550(US)**

(72) Inventor: **Landingham, Richard L.**
**2112 Chateau Place**
**Livermore, Cal. 94550(US)**

(74) Representative: **Reinländer & Bernhardt Patentanwälte**
**Orthstrasse 12**
**D-8000 München 60(DE)**

(54) Novel compositions for oxide ceramics.

(57) Improved ceramic tool compositions comprising primarily aluminum oxide are provided. The aluminum oxide can be supplemented with other oxides including zirconium oxide, magnesium oxide, hafnium oxide. In addition are added silicon nitride or aluminum nitride together with dispersed particles comprising carbides and carbonitrides. These compositions are prepared by e.g., a reaction hot pressing process and ceramic bodies prepared in accordance with the invention display superior wear resistance to conventional tool compositions.

## Description
## NOVEL COMPOSITIONS FOR OXIDE CERAMICS

Technical Field

This invention relates to novel oxide matrix ceramic compositions and more particularly to oxide matrix ceramics with high wear resistance and low materials cost.

Background Art

Ceramic compositions based on alumina ($Al_2O_3$) have been in use for many years. Their applications in, e.g. the cutting tool industry have been recognized and utilized extensively. However, ceramics such as $Al_2O_3$ + $ZrO_2$ and $Al_2O_3$ + TiC + $ZrO_2$ have been criticized as being brittle or difficult to fabricate into complex shapes. Additional amounts of $ZrO_2$ have not been found to improve mechanical shock resistance and additional TiC has not significantly improved wear resistance.

The search for improved ceramic compositions has produced compositions known as SIALON, an acronym for silicon aluminum oxynitride. This composition in its most advantageous application consists primarily of beta-SIALON. However, this compound is one of the more expensive elements of ceramic composition and thus contributes to increased fabrication costs.

This difficulty has been recognized and other starting materials have been proposed which result through processing in a sialon composition from less expensive starting materials. See for example, U.S. Patent 4,184,884.

Others have sought to improve the composition of ceramics available for cutting tool applications and the like through expensive fabrication techniques such as for example, hot isostatic pressing. However, this also results in increased fabrication costs even though the starting materials may be relatively abundant.

It has been recognized that the $Al_2O_3$ component of sialon can be increased, but uncertainty exists as to how much $Al_2O_3$ can be accomodated in this matrix. See for example U.S. Patent No. 4,071,371 to Milberg et al.

Kamigaito et al. has disclosed a composition of $Si_3N_4$ and $Al_2O_3$ which also include AlN in widely varying amounts, U.S. Patent No. 3,903,230.

## Disclosure of the Invention

It is thus an object of the present invention to provide compositions for oxide matrix ceramics which have superior resistance to thermal shock, mechanical shock and abrasion.

It is another object of this invention to provide compositions for oxide matrix ceramics which utilize low cost starting material.

It is a further object of this invention to provide compositions of oxide matrix ceramics which possess superior resistance to thermal shock, mechanical shock and abrasion without requiring complex and expensive fabrication techniques.

These and further objects of the present invention will be realized by consideration of the following disclosure and appended drawings.

The present invention provides compositions for ceramics about 60 to 99% by weight of oxides, primarily $Al_2O_3$, about 0.1 to 40% by weight of nitride modifiers, and about 0 to 40% by weight of nitride, carbide or carbonitride dispersion particles.

## Brief Description of the Drawings

Figure 1 is a ternary constitution diagram showing the composition ranges of the oxide matrix mixtures which form ceramic embodiments of the present invention;

Figures 2 thru 5 are graphs demonstrating the wear comparison between various ceramic embodiments made according to the present invention and commercially available ceramic tools.

Best Mode For Practicing the Invention

The oxide-matrix ceramics provided by the present invention include a novel series of ceramic compositions which improve the performance of ceramics as, for example, wear parts, electronic substrates, cutting tools, and engine components. The limitations of ceramics composed of $Al_2O_3$ and $ZrO_2$, and $Al_2O_3$, TiC and $ZrO_2$ have been apparent in some metal cutting tool applications. These ceramic tool inserts have demonstrated sensitivity to thermal shock, mechanical shock and abrasion causing excessive wear or abrupt failure.

The present invention utilizes inexpensive and readily available oxides such as e.g. $Al_2O_3$, MgO, $ZrO_2$ as the basic ingredients or matrix ceramics, while varying the nitride modifier additives such as $Si_3N_4$ and AlN to improve this matrix in supporting and holding the dispersed particle additives such as e.g. TiC, TiN, $TiC_xN_y$ (where $x + y = 1$) and $B_4C$.

Oxides which are used in the present invention can include $Al_2O_3$, MgO, $ZrO_2$ and $HfO_2$. Of these oxides $Al_2O_3$ is most usually the major compound and the additions of other oxides are generally held to the range of approximately zero to 20 weight per cent of the entire composition. These additional oxides can provide improvement in the composition of the predominately $Al_2O_3$ matrix by serving as grain growth inhibitors, and increasing the resistance of the resultant composition to shocks and abrasion.

In numerous preferred embodiments of the present invention, MgO is added to the predominately $Al_2O_3$ matrix, generally in the range of approximately zero to 2 weight percent, to inhibit grain growth. Usually additions of MgO are in the range of approximately zero to 0.7 weight percent.

Additions of $ZrO_2$ and $HfO_2$ are also useful in preferred embodiments of the present invention. Such additions, generally in the range of approximately zero to 20 weight percent, have demonstrated improvements in the fracture toughness and thermal shock resistance of the predominately $Al_2O_3$ matrix embodiments of the present invention. However, substitution of $HfO_2$ for $ZrO_2$ is less frequent due to its increased cost and reduced effectiveness in crack blunting.

Additions of MgO and $ZrO_2$ or $HfO_2$ have also proven advantageous in certain embodiments of this invention, generally when the nitride modifier additions are in the range of zero to 15 weight percent of the composition.

It has now surprisingly been found advantageous to include limited amounts of nitride modifiers and other dispersion particle compounds to obtain further improvements of the oxide matrix. These nitride modifiers include $Si_3N_4$ and AlN generally in the range of zero to 20 weight per cent of the resultant composition. More usually, an advantageous composition representing an embodiment of the present invention is obtained with an addition of 2 to 15 weight per cent of $Si_3N_4$ to the predominately $Al_2O_3$ matrix composition. In certain applications however additional improvements can be obtained by decreasing the amount of added $Si_3N_4$ and supplementing the matrix with AlN, together with the various dispersed particle compounds.

These other dispersion particles, generally nitrides, carbides and carbonitrides, will also improve the wear resistance and hardness of the resultant ceramic composition and may be blended in various amounts in the composition to tailor the ceramic composition to a specific application. In general the particle dispersion compound consists of such compounds as TiC, TiN, ZrC, ZrN, HfC, HfN, $B_4C$, and $TiC_xN_y$, $ZrC_xN_y$, and $HfC_xN_y$ where x plus y is generally in the range of approximately 0.5 to 1. These dispersed particles can be added to the ceramic composition generally to a final concentration of approximately zero to 40 weight per cent.

The selection of the appropriate nitrides, carbides and carbonitrides for the dispersed particles is generally dependent upon the specific application for the ceramic composition. The disclosed carbides harden the matrix and are generally preferred in the order: TiC, ZrC, $B_4C$ and HfC. The substitution of HfC is less frequent because of its higher cost and decreased effectiveness.

The addition and substitution of other nitrides and carbonitrides is generally only required when flank wear on tools is a problem, such as e.g. when cutting certain metals. Such additions and substitutions can reduce wear and ultimate tool failure up to approximately 50% in such applications. The substitution of carbonitrides is generally preferred over mixtures of carbides and nitrides because there is generally improved performance and less dispersion problems. However, the cost of carbonitrides is often higher than the mixture of carbides and nitrides.

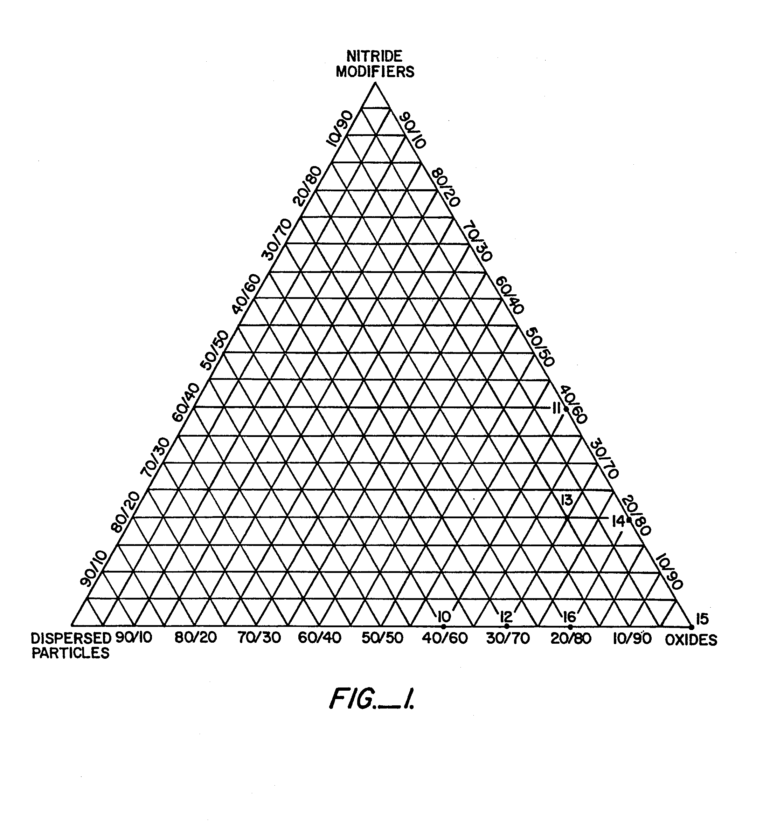

Turning to Figure 1, the oxide matrix ceramics are shown as the major element or matrix with some substitution of nitride modifiers and other dispersion particles to improve this oxide matrix. The compositional tie line between 10 and 11 represent the approximate boundary of substutitional trade-offs between nitrides for matrix modifications and dispersion particles. Thus, the composition of this invention are those contained within the boundary of the diagram and the above mentioned tie line 10-11.

The more preferred compositional mixtures are enclosed within the trapezoid marked 12, 13, 14, 15. The compositions within this region provide the advantages of high oxide matrix content for low materials cost and ample matrix support for holding the dispersion particles. Within this region, there is provision for nitride substitution to allow matrix modification which improve the oxide matrix for most existing applications in cutting tools, wear parts, electronic substrates and engine components.

Compositions contained within the boundary 14-15-16 provide even more benefit by their maximization of a high oxide matrix content with sufficient nitrides and dispersion particles to significantly improve the performance of the ceramics obtained therefrom, while maximizing the use of lowest cost starting materials.

In one preferred embodiment of the invention, from 2 to 15% of $Si_3N_4$ is added to the $Al_2O_3$ matrix.

The ceramics of the present invention are generally prepared by reaction hot pressing. This avoids pre-reaction treatment of the powders which increase the cost of fabrication and raw materials. In addition, the reaction assists in the densification of the resultant ceramic body, while avoiding the higher temperatures needed for pre-reacted powders. Such higher temperatures can increase grain growth and reduce the strength and toughness of the ceramic.

In general, fine powders (approximately 325 mesh) are pre-mixed and poured into a die cavity, which can be constructed e.g. of graphite. The mixture is then enclosed in the die with a punch which is capable of applying pressure of approximately 1,000 to 4,000 psi.

While pressure is applied, the die is heated to the desired temperature, generally in the range of 1500 to 1650°C. The conditions of pressure and temperature are maintained for a sufficient time, generally 15 to 30 minutes, and often the reaction is carried out in an inert environment, e.g. under nitrogen. Thereafter the assembly is cooled to room temperature and the ceramic body is removed. Under these conditions, densities of 98% of theoretical or greater are achieved.

As an alternative, the compositions can be sintered by using pre-reacted powder and cold pressing at up to 30,000 psi. Thereafter, the composition can be sintered at 1,650 to 1,800°C under nitrogen for a period of from one to three hours depending on the size of the ceramic body.

The following examples are provided by way of illustration, and are not intended to limit the scope of the disclosure and its appended claims.

Experimental

The following Table 1 discloses compositions which illustrate embodiments of the present invention. Compositions are numbered and reference is made thereby to the experimental examples and figures when appropriate.

Table 1

Examples of compositions evaluated for improving the performance of existing ceramic cutting tools (1, 2, 12, and 13):

Composition weight %

| No. | Al$_2$O$_3$ | TiC | MgO | ZrO$_2$ | Si$_3$N$_4$ | AlN | TiN |
|---|---|---|---|---|---|---|---|
| 1 | 68.8 | .30.0 | 0.2 | | | | |
| 2 | 64.8 | 30.0 | 0.2 | 4.0 | | | |
| 3 | 70.0 | 0.1 | | | 29.9 | | |
| 4 | 70.0 | 0.2 | | | 29.8 | | |
| 5 | 70.0 | 0.5 | | | 29.5 | | |
| 6 | 70.0 | 15.0 | | | 15.0 | | |
| 7 | 75.0 | 5.0 | | | 20.0 | | |
| 8 | 85.0 | | | | 15.0 | | |
| 9 | 75.0 | | | | 20.0 | 5.0 | |
| 10 | 70.0 | | | | 20.0 | 10.0 | |
| 11 | 70.0 | | | | 15.0 | 15.0 | |
| 12 | 68.8 | 15.0 | 0.2 | | | | 15.0 |
| 13 | 64.8 | 15.0 | 0.2 | 4.0 | | | 15.0 |
| 14 | 70.0 | 7.5 | | | 15.0 | | 7.5 |
| 15 | 70.0 | | | | 15.0 | | 15.0 |
| 16 | 64.8 | 7.5 | 0.2 | 4.0 | 15.0 | | 7.5 |
| 17 | 70.0 | | | | 30.0 | | |

It should be understood that in the present invention, as demonstrated by these examples, TiC can be supplemented or substituted by e.g. ZrC, HfC or TiNC. Furthermore, TiN can be supplemented or substituted by e.g. ZrN or HfN.

Example 1

Seventy parts by weight of Al$_2$O$_3$ were mixed with 29.9 parts by weight of Si$_3$N$_4$ and 0.1 parts by weight of TiC, blended as very fine powders and formed into free flowing granules. This mixture (No. 3) was loaded into a mold of the desired shape and pressed in a nitrogen or inert environment at elevated temperature, allowing the oxides and nitrides to densify in a reaction hot pressing process as disclosed previously.

The sintered ceramic tool bodies had a density greater than 98% of the theoretical.

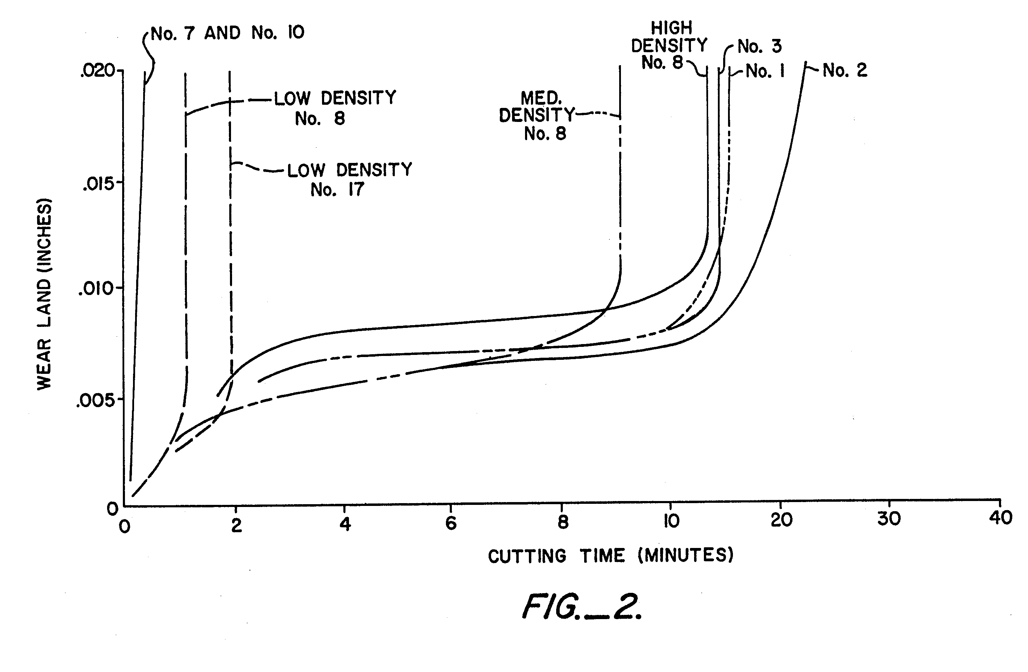

The experimental tool was tested in a wear comparison with a tools of composition numbers 1, 2, 7, 8, 10 and 17 and the results on chilled cast iron are indicated in Figure 2.

Example 2

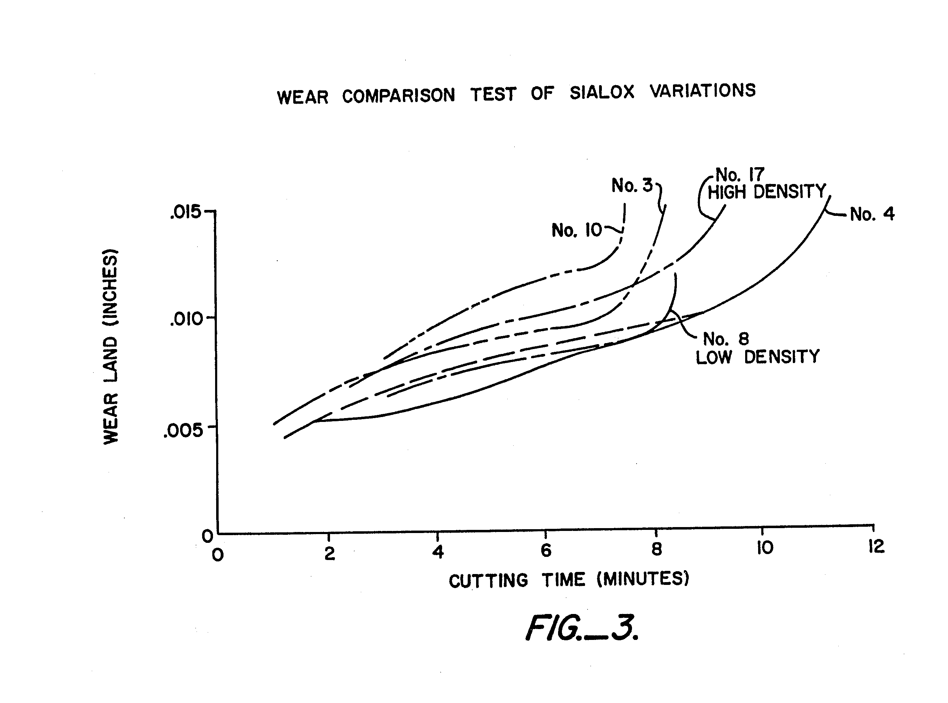

Seventy parts by weight of $Al_2O_3$ were mixed with 10 parts by weight of AlN and 20 parts by weight of $Si_3N_4$ (Composition No. 10). Ceramic tool bodies were prepared according to the method of Example 1. The sintered tools had a density greater than 98% of the theoretical. The wear comparison was performed between this composition (No. 10) and tools of composition numbers 3, 4, 8 and 17 on steel and the results were as indicated in Figure 3.

Example 3

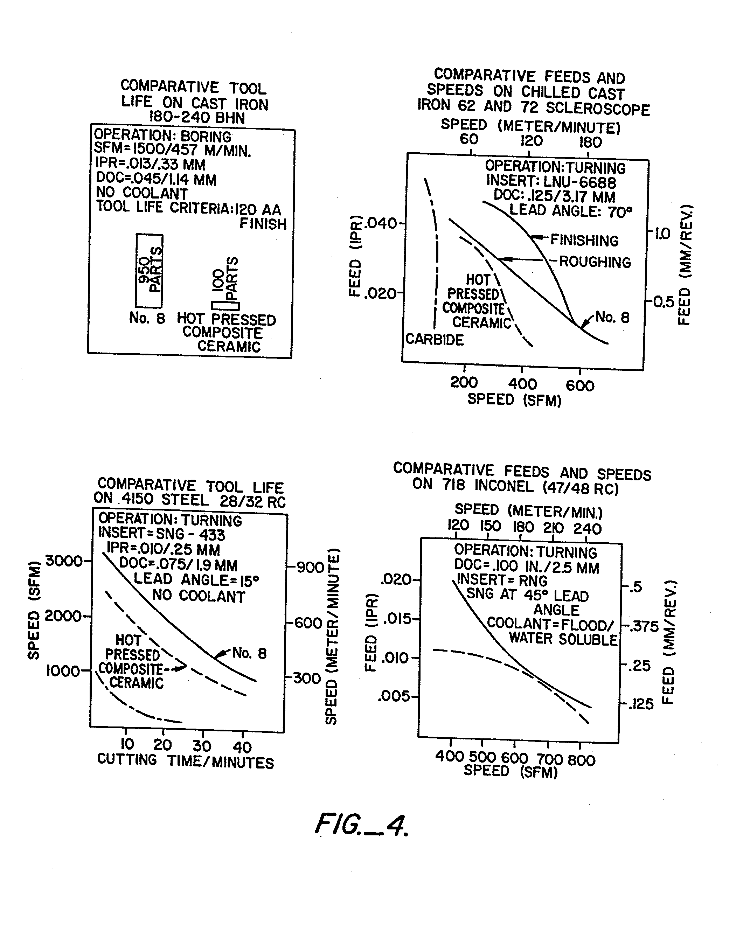

Eighty-five parts by weight of $Al_2O_3$ was mixed with 15 parts by weight of $Si_3N_4$ (composition no. 8) and ceramic tool bodies were prepared according to the method of Example 1. The sintered pieces had a density greater than 98% of theoretical. A wear comparison test was performed between this tool composition and commercially available tools of TiC - $Al_2O_3$ and WC - CO compositions and the results are as indicated in Figure 4.

Example 4

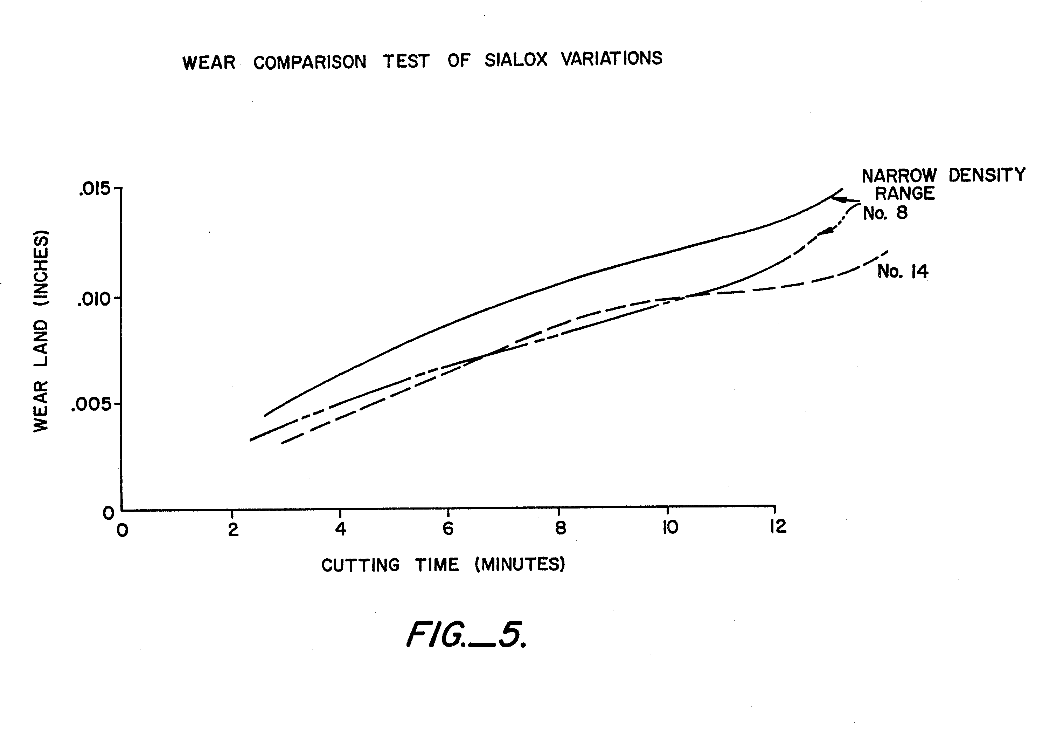

Seventy parts by weight of $Al_2O_3$ was mixed with 7.5 parts by weight of TiC, 15 parts by weight of $Si_3N_4$ and 7.5 parts by weight of TiN (composition no. 14). The ceramic tool bodies were prepared by the method of Example 1 and the sintered tools had a density greater than 98% of theoretical. A wear comparison was

0142771

performed between the tool composition of this example
and a tool of No. 8 composition.  The results on steel
were as indicated in Figure 5.

In the examples above, it can be seen that
comparisons of all compositions can be obtained by
correlation with the composition No. 8.  This
composition was generally found to perform equal to or
better than every other composition in the tests.

Although the foregoing invention has been
described in some detail by way of illustration and
example, for purposes of clarity of understanding, it
will be obvious that certain changes and modifications
may be practiced within the scope of the appended
claims.  As an example, in the composition set forth in
the examples, the various additions detailed may be
supplemented or substituted by alternative compound as
previously disclosed.

0142771

## Claims

1.  A ceramic composition for use in tools
comprising a predominately aluminum oxide matrix
together with an essentially uniform distribution of
nitride modifiers and dispersion particles, wherein the
weight proportion of the oxides, nitride modifiers and
dispersion particles lies approximately within the area
identified as 10-11-15 of the ternary constitution
diagram shown in Figure 1 of the drawings.

2.  A ceramic composition as recited in Claim 1
wherein the weight per cent proportion lies
approximately within the area identified as 12-13-14-15
of the ternary constitution diagram shown in Figure 1
of the drawings.

3.  A ceramic composition as recited in Claim 1
wherein the weight per cent proportion lies
approximately within the area identified as 14-15-16 of
the ternary constitution diagram shown in Figure 1.

4.  A ceramic composition as recited in Claim 1
wherein the nitride modifier is silicon nitride in an
amount from approximately 2 to 15 weight per cent of
the total weight of the composition.

5.  A ceramic composition as recited in Claim 1,
wherein the nitride modifiers are selected from the
group consisting of silicon nitrides and aluminum
nitrides.

6.  A ceramic composition as recited in Claim 1, wherein the dispersion particles are selected from the group consisting of titanium carbides, titanium nitrides, titanium carbonitrides, zirconium carbides, zirconium nitrides, zirconium carbonitrides, hafnium carbides, hafnium nitrides and hafnium carbonitrides.

7.  A ceramic composition as recited in Claim 1, wherein the aluminum oxide is supplemented with at least one oxide compound selected from the group consisting of magnesium oxide, zirconium oxide, and hafnium oxide.

8.  A ceramic composition for use in tools comprising a predominantly aluminum oxide matrix together with an essentially uniform distribution of nitride modifiers and dispersion particles, wherein the nitride modifiers comprise from approximately 0.1 to 40 weight percent of the composition and the dispersion particles comprise from approximately zero to 40 weight percent of the composition.

9.  A ceramic composition as recited in claim 8 wherein the nitride modifier is silicon nitride in an amount from approximately 2 to 15 weight percent of the total weight of the composition.

10.  A ceramic composition as recited in claim 8 consisting of 85 percent by weight of aluminum oxide and 15 percent by weight of silicon nitride.

FIG._1.

FIG._2.

WEAR COMPARISON TEST OF SIALOX VARIATIONS

FIG._3.

0142771

4/5    0142771

COMPARATIVE TOOL
LIFE ON CAST IRON
180-240 BHN

OPERATION: BORING
SFM=1500/457 M/MIN.
IPR=.013/.33 MM
DOC=.045/1.14 MM
NO COOLANT
TOOL LIFE CRITERIA:120 AA
FINISH

950 PARTS — No. 8
100 PARTS — HOT PRESSED COMPOSITE CERAMIC

COMPARATIVE FEEDS AND
SPEEDS ON CHILLED CAST
IRON 62 AND 72 SCLEROSCOPE

SPEED (METER/MINUTE)
60    120    180

OPERATION: TURNING
INSERT: LNU-6688
DOC: .125/3.17 MM
LEAD ANGLE: 70°

FEED (IPR)
.040
.020

FINISHING
ROUGHING
HOT PRESSED COMPOSITE CERAMIC
No. 8
CARBIDE

FEED (MM/REV.)
1.0
0.5

SPEED (SFM)
200    400    600

COMPARATIVE TOOL LIFE
ON .4150 STEEL 28/32 RC

OPERATION: TURNING
INSERT=SNG-433
IPR=.010/.25 MM
DOC=.075/1.9 MM
LEAD ANGLE=15°
NO COOLANT

SPEED (SFM)
3000
2000
1000

HOT PRESSED COMPOSITE CERAMIC
No. 8

SPEED (METER/MINUTE)
900
600
300

CUTTING TIME/MINUTES
10   20   30   40

COMPARATIVE FEEDS AND SPEEDS
ON 718 INCONEL (47/48 RC)

SPEED (METER/MIN.)
120  150  180  210  240

OPERATION: TURNING
DOC=.100 IN./2.5 MM
INSERT= RNG
SNG AT 45° LEAD
ANGLE
COOLANT=FLOOD/
WATER SOLUBLE

FEED (IPR)
.020
.015
.010
.005

FEED (MM/REV.)
.5
.375
.25
.125

SPEED (SFM)
400 500 600 700 800

FIG._4.

WEAR COMPARISON TEST OF SIALOX VARIATIONS

FIG._5.